# EUROPÄISCHE PATENTSCHRIFT

(11) **EP 0 424 655 B1**
(45) Veröffentlichungstag und Bekanntmachung des Hinweises auf die Patenterteilung: **22.03.1995**
(21) Anmeldenummer: 90117577.8
(22) Anmeldetag: 12.09.1990
(51) Int. Cl.: H04N 7/00

(54) **Verfahren zur Übertragung von Breitbild-Videosignalen zur Darstellung auf Fernsehempfängern mit einem herkömmlichen oder einem vergrösserten Bildseitenverhältnis**
Method of transmission of widescreen videosignals for display on television receivers with a conventional or wide aspect ratio
Méthode de transmission de signaux vidéo d'une image à large écran pour la visualisation sur des récepteurs de télévision avec un format conventionnel ou agrandi

(30) Priorität: 24.10.1989 DE 3935358
(43) Veröffentlichungstag der Anmeldung: 02.05.1991
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Hegendörfer, Max, Grundig E.M.V., Max Grundig, D-90762 Fürth (DE)

(56) Entgegenhaltungen:
- EP-A- 0 416 115
- DE-C- 3 840 054
- DE-C- 3 843 423

## Beschreibung

Die Erfindung betrifft ein Verfahren zur Übertragung von Breitbild-Videosignalen zur Darstellung auf Fernsehempfängern mit einem herkömmlichen oder einem vergrößerten Bildseitenverhältnis mit den im Oberbegriff des Anspruchs 1 angegebenen Merkmalen. Weiterhin betrifft die Erfindung einen Sender zur Erzeugung von Videosignalen, die in einem Verfahren gemäß Anspruch 1 übertragen werden, sowie einen Empfänger zur Darstellung derartiger Videosignale.

Bei der Diskussion um zukünftige Fernsehsysteme muß unterschieden werden zwischen sog. HDTV-Systemen, welche mit einer höheren Zeilenzahl arbeiten als die heutigen Fernsehsysteme PAL, NTSC und SECAM und mit diesen nicht kompatibel sind, und verbesserten Fernsehsystemen, welche mit den heutigen Fernsehsystemen kompatibel sind.

Verbesserte kompatible Fernsehsysteme haben den Vorteil, daß die heute auf dem Markt befindlichen Empfänger auch weiterhin verwendbar sind.

In der Zeitschrift"SMPTE-Journal", Januar 1989, S. 14-19, werden zwei Wege zur Realisierung eines verbesserten kompatiblen (NTSC)-Fernsehsystems aufgezeigt. Der erste Weg besteht im wesentlichen darin, Chrominanzinformation nur in jedem zweiten Vollbild zu übertragen und die dazwischen liegenden Vollbilder zur Übertragung von hochauflösender Luminanzinformation zu nutzen. Der zweite Weg besteht im wesentlichen darin, zur Bildverbesserung geeignete Zusatzinformationen in dunkelgetasteten Bereichen am oberen und unteren Bildrand zu übertragen. Ein verbesserter Empfänger besitzt Schaltungen, die diese Zusatzinformationen zum Erhalt eines Bildes mit verbesserter Vertikalauflösung auswerten. Mittels eines herkömmlichen Empfängers kann ein Bild dargestellt werden, welches am oberen und unteren Rand schwarze Balken aufweist.

Ferner ist aus der Zeitschrift "Funkschau", 1989, Heft 8, S. 56, der DE-PS 38 40 054 und der Zeitschrift "Fernseh- und Kino-Technik", 1989, Nr. 8, S. 407-410, ein Verfahren zur Realisierung eines PAL-Übertragungssystems bekannt, bei dessen Verwendung auf einem Breitbildempfänger ein Bild mit einem Bildbreiten- zu Bildhöhen-Verhältnis von 16 : 9 darstellbar ist, während auf einem herkömmlichen 4 : 3-Empfänger ein Bild mit am oberen und unteren Bildrand auftretenden dunklen Streifen dargestellt werden kann.

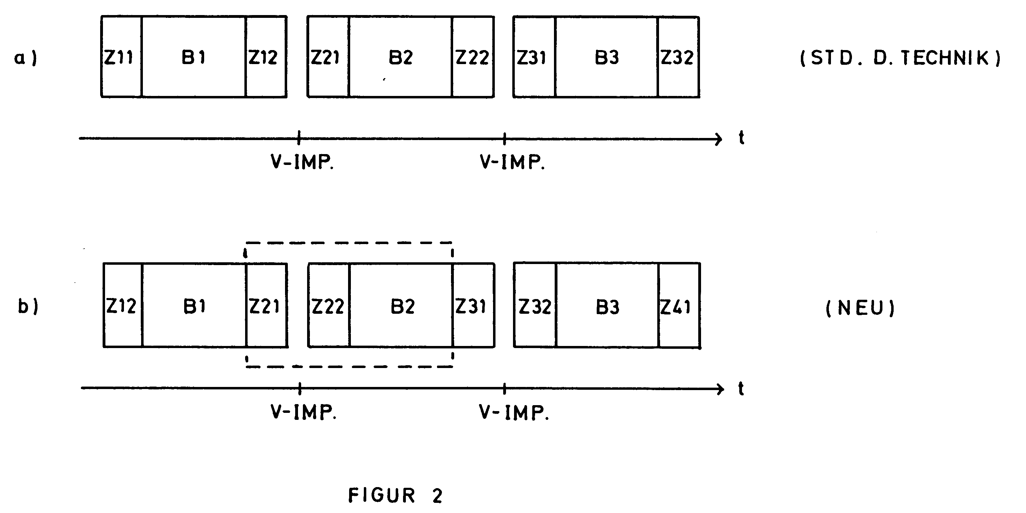

Dazu erfolgt bildquellenseitig eine Abtastung mit einem Raster entsprechend einem vergrößerten Bild-Seitenverhältnis von 16 : 9. Danach wird mittels eines Konverters die Zeilenzahl der sichtbaren Zeilen entweder durch Weglassen jeder 4. Zeile oder mittels eines Interpolationsvorganges von 575 auf 431 reduziert. Diese verbleibenden 431 Zeilen werden spatial komprimiert und in einen symmetrisch zur Bildmitte liegenden Bereich eingesetzt. In die frei werdenden spatialen Räume am oberen und unteren Bildrand (jeweils 72 Zeilen) werden die im genannten Konverter abgesonderten Informationen, deren Amplituden auf den Ultraschwarzbereich abgesenkt wurden und welche im folgenden als Zusatzsignale bezeichnet werden, eingesetzt. Das so erzeugte Signal wird über eine Übertragungsstrecke auf die Empfangsseite übertragen. Die Figur 2a zeigt ein Zeitdiagramm zur Erläuterung eines mittels des bekannten Systems übertragenen Signals. Es ist ersichtlich, daß ein erster Teil Zx1 der zu einem Bild x gehörigen Zusatzsignale zeitlich vor der zugehörigen Bildmitteninformation Bx übertragen wird, während ein zweiter Teil Zx2 der zu einem Bild x gehörigen Zusatzsignale zeitlich nach der zugehörigen Bildmitteninformation Bx übertragen wird. Ein auf der Empfangsseite angeordneter 16 : 9-Empfänger weist eine Bildsignalverarbeitungsstufe auf, in welcher die symmetrisch zur Bildmitte übertragenen 431 Zeilen spatial dekomprimiert werden. Ferner werden in der Bildsignalverarbeitungsstufe die in jeweils 72 Zeilen am oberen und unteren Bildrand übertragenen Zusatzsignale abgetrennt und in zeitlich richtiger Reihenfolge in die spatial dekomprimierten 431 Zeilen eingefügt. Ein Nachteil des beschriebenen Systems besteht darin, daß die genannte Bildsignalverarbeitungsstufe einen Speicher für die 431 symmetrisch zur Bildmitte übertragenen Zeilen benötigt, da ein Teil der zur Bildregenerierung notwendigen Zusatzsignale - wie oben bereits erläutert wurde - zeitlich nach den genannten 431 Zeilen übertragen wird. Ein weiterer Nachteil des beschriebenen Systems besteht darin, daß die Adressierung des bekannten Speichers aufwendig ist.

Ausgehend von diesem Stand der Technik liegt der Erfindung die Aufgabe zugrunde, einen Weg aufzuzeigen, wie die vorgenannten Nachteile vermieden werden können.

Diese Aufgabe wird im wesentlichen dadurch gelöst, daß im Sender dafür gesorgt wird, daß die im verbesserten 16 : 9-Empfänger zur Regenerierung eines Bildes notwendigen Zusatzsignale, welche beim bekannten Stand der Technik am oberen und unteren Bildrand der jeweils zugehörigen Bildmitteninformation und damit teilweise vor und teilweise nach der zugehörigen Bildmitteninformation übertragen werden, nunmehr teilweise am unteren Bildrand der vorhergehenden Bildmitteninformation und zum anderen Teil am oberen Bildrand der zugehörigen Bildmitteninformation und damit ausschließlich vor der zugehörigen Bildmitteninformation übertragen werden.

Eine derartige Übertragungsweise wird in EP-A-0 416 115 vorgeschlagen. Dieses Dokument ist nur im Sinne von Artikel 54 (3) EPÜ relevant und unterscheidet sich von der vorliegenden Anmeldung, da seitliche Bildinformationen so übertragen werden.

Die Vorteile der Erfindung bestehen insbesondere darin, daß ein verbesserter 16 : 9-Empfänger lediglich einen Speicher zur Zwischenspeicherung des am unteren Bildrand der vorhergehenden Bildmitteninformation und am oberen Bildrand der zugehörigen Bildmitteninformation übertragenen Zusatzsignale benötigt. Ein Speicher für die symmetrisch zur Bildmitte übertragenen 431 Zeilen ist im verbesserten Empfänger prinzipiell nicht mehr notwendig. Aber selbst wenn im verbesserten Empfänger beispielsweise zur Wiedergabe mit erhöhter Bildwechselfrequenz ein derartiger Speicher vorgesehen ist, bietet die beanspruchte Lehre den Vorteil einer einfachen Speicheradressierung.

Weitere vorteilhafte Eigenschaften der Erfindung ergeben sich aus der Erläuterung eines Ausführungsbeispiels anhand der Figuren.

Es zeigt
- Figur 1 ein Blockschaltbild zur Erläuterung des beanspruchten Systems,
- Figur 2a ein Zeitdiagramm zur Erläuterung der Übertragung bei einem bekannten System,
- Figur 2b ein Zeitdiagramm zur Erläuterung der Übertragung beim beanspruchten System, und
- Figur 3 ein Diagramm zur Erläuterung einer vorteilhaften Ausgestaltung der Erfindung.

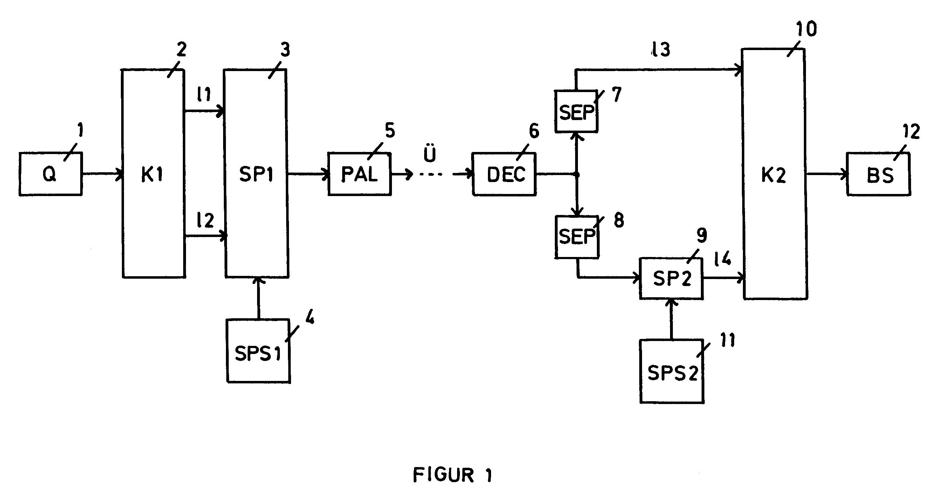

Die Figur 1 zeigt ein Blockschaltbild zur Erläuterung des beanspruchten Systems.

Der Sender des beanspruchten Systems enthält eine Bildsignalquelle 1, beispielsweise eine Fernsehkamera, welche an ihrem Ausgang ein Zeilensprung-Videosignal mit 625 Zeilen, einer Bildwechselfrequenz von 50 Hz und einem Bildbreiten- zu Bildhöhen-Verhältnis von 16 : 9 zur Verfügung stellt. Dieses Videosignal wird einem ersten Konverter 2 zugeführt. In diesem Konverter wird das Videosignal in erste Blöcke mit jeweils 4 Zeilen unterteilt. Aus jedem dieser ersten Blöcke wird entweder durch Weglassen einer Zeile oder mittels eines Interpolationsvorganges ein zweiter Block gebildet, welcher nur noch 3 Zeilen aufweist. Diese zweiten Blöcke werden an einem ersten Ausgang des Konverters 2 zur Verfügung gestellt und über eine Verbindung 11 einem ersten Speicher 3 zugeführt. Ferner enthält der Konverter 2 einen zweiten Ausgang, an welchem die durch Weglassen einer Zeile oder die durch den Interpolationsvorgang abgesonderten Informationen, welche im folgenden als Zusatzsignale bezeichnet werden, zur Verfügung gestellt werden. Diese Zusatzsignale werden dem ersten Speicher 3 über eine Verbindung 12 zugeführt. Der Auslesevorgang aus dem ersten Speicher 3 wird von einer ersten Speichersteuerschaltung 4 derart gesteuert, daß ein erster Teil der Zusatzsignale in die am unteren Bildrand gelegenen 72 Zeilen des vorhergehenden Bildes bzw. der vorhergehenden Bildmitteninformation und ein zweiter Teil der Zusatzsignale in die am oberen Bildrand gelegenen 72 Zeilen des aktuellen Bildes bzw. der aktuellen Bildmitteninformation und die dem ersten Speicher 3 über die Verbindung 11 zugeführten Signale als aktuelle Bildmitteninformation in im mittleren Teil des Bildes liegende Zeilen eingefügt werden.

Die Figur 2b zeigt ein Zeitdiagramm zur Erläuterung eines derartigen Signals. Es ist ersichtlich, daß sowohl der erste Teil Zx1 als auch der zweite Teil Zx2 der zu einer Bildmitteninformation Bx gehörigen Zusatzinformationen zeitlich vor dieser übertragen wird.

Das auf die vorstehend beschriebene Art und Weise erzeugte Signal wird in einem PAL-Coder 5 PAL-codiert und an eine Übertragungsstrecke Ü geleitet.

Das über die Übertragungsstrecke Ü übertragene Signal wird in einem PAL-Decoder 6 decodiert. Aus dem decodierten Signal werden mittels einer ersten Trennschaltung 7 die im mittleren Teil des Bildes übertragenen Signale bzw. die Bildmitteninformationen abgetrennt und über eine Verbindung 13 einem zweiten Konverter K2 zugeführt. Weiterhin werden aus dem decodierten Signal mittels einer zweiten Trennschaltung 8 die am unteren Bildrand des vorhergehenden Bildes und die am oberen Bildrand des aktuellen Bildes übertragenen Zusatzsignale abgetrennt und in einem zweiten Seicher 9 zwischengespeichert. Eine zweite Speichersteuerschaltung 11 steuert den Auslesevorgang aus dem zweiten Speicher 9 derart, daß die verzögerten Zusatzsignale zeitlich komprimiert und in zeitlich richtiger Zuordnung zum jeweils zugehörigen zeilenzahlreduzierten Block der im mittleren Teil des Bildes übertragenen Signale ausgelesen und über eine Verbindung 14 dem zweiten Konverter 10 zugeführt werden. Dieser regeneriert aus den zeilenzahlreduzierten Blöcken und den jeweils zugehörigen Zusatzsignalen - entweder durch Wiedereinfügen jeder 4. Zeile oder mittels eines Interpolationsvorganges - ein Videosignal mit einem Bildbreiten- zu Bildhöhen-Verhältnis von 16 : 9. Hierzu weist der zweite Konverter 10 beispielsweise zwei Speichereinheiten auf, deren Speicherkapazität jeweils 3 Zeilen entspricht. Während in eine der beiden Speichereinheiten die Information eines zeilenzahlreduzierten Blocks mit der Taktrate des übertragenen Signals eingeschrieben wird, wird aus der anderen der beiden Speichereinheiten mit erhöhter Taktrate ausgelesen. Die aus dem Speicher ausgelesenen Informationen werden ebenso wie das zugehörige Zusatzsignal einer ebenfalls innerhalb des zweiten Konverters 10 angeordneten Signalverarbeitungsstufe zugeführt und dort in das genannte 16 : 9-Signal umgewandelt.

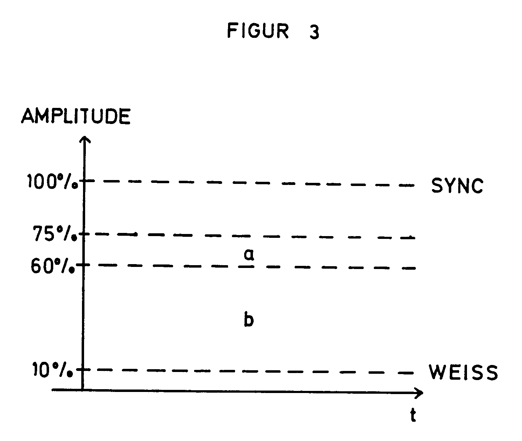

Im folgenden wird eine vorteilhafte Ausgestaltung der Erfindung beschrieben. Die Zusatzsignale müssen derart übertragen werden, daß sie bei einem herkömmlichen 4 : 3-Empfänger, bei dem das wiedergegebene Signal mit schwarzen Balken am oberen und unteren Bildrand dargestellt wird, keine auf dem Bildschirm sichtbaren Störungen verursachen. Um dies zu erreichen, wird im beschriebenen Sender mittels einer Klemmschaltung der Schwarzpegel des Signals während der am oberen und unteren Bildrand liegenden Zeilen, in denen das Zusatzsignal ggfs. bandbegrenzt übertragen wird, auf beispielsweise 75 % der Maximalamplitude des Zeilensignals geklemmt, wie es heute allgemein üblich ist, und während der in der Bildmitte übertragenen Zeilen beispielsweise auf 60 % der Maximalamplitude des Zeilensignals. Dadurch steht der Bereich zwischen 75 % und 60 % der Maximalamplitude des Zeilensignals für die Übertragung der Zusatzsignale in den am oberen und unteren Bildrand liegenden Zeilen zur Verfügung. Dies ist in Figur 3 veranschaulicht. Der Zeilensynchronimpuls wird mit Maximalamplitude bzw. 100 % Aussteuerung übertragen. Im Bereich a zwischen 75 % und 60 % der Maximalamplitude werden die am oberen und unteren Bildrand eingefügten Zusatzsignale übertragen. Der Bereich b zwischen 60 % und 10 % der Maximalamplitude steht für die Bildmitteninformation zur Verfügung .

Um die Amplituden von Bildmitteninformation und Zusatzsignal auf die gewünschten Bereiche einzustellen, ist zwischen dem ersten Konverter 2 und dem ersten Speicher 3 eine nicht gezeichnete Amplitudeneinstellstufe vorgesehen. Ferner benötigt der 16 : 9-Empfänger eine vor dem zweiten Konverter angeordnete Amplitudeneinstellstufe, um die Amlitude und das Niveau (Gleichspannungswert) des Zusatzsignals und die Amplitude und den Schwarzwert der Bildmitteninformation wieder auf die ursprünglichen Werte zu bringen. Störungen der Synchronisation des Empfängers, wie sie bei einer Übertragung des Zusatzsignals im Ultraschwarzbereich auftreten könnten, sind bei einer derartigen Übertragung des Zusatzsignals ausgeschlossen. Die durch die beschriebene Umschaltung des Schwarzpegels bedingte Kontrastreduktion und die Einbußen am Video-Störabstand können durch eine geeignete Einstellung von Kontrast und Verstärkung wieder wettgemacht werden.

## Patentansprüche

1. Verfahren zur Übertragung von
Breitbild-Videosignalen, bei dem
- senderseitig ein Videosignal mit herkömmlicher Zeilenzahl und einem im Vergleich zum herkömmlichen Bildbreiten- zu Bildhöhen-Verhältnis vergrößerten Bildbreiten- zu Bildhöhen-Verhältnis erzeugt wird, dieses Videosignal in eine Vielzahl von ersten Blöcken mit jeweils n Zeilen unterteilt wird, aus jedem dieser ersten Blöcke ein zeilenzahlreduzierter zweiter Block und ein Zusatzsignal ermittelt wird, welches die durch die Zeilenzahlreduktion abgesonderten Informationen enthält, und die zeilenzahlreduzierten zweiten Blöcke in im mittleren Teil des Bildes liegende Zeilen und die Zusatzsignale in am oberen und unteren Bildrand liegende Zeilen eingefügt werden, und
- empfangsseitig die in am oberen und unteren Bildrand liegenden Zeilen übertragenen Zusatzsignale nach zeitlicher Umordnung in das im mittleren Teil des Bildes übertragene Signal eingefügt werden,
**dadurch gekennzeichnet**, daß senderseitig die Zusatzsignale des aktuellen Bildes in am unteren Bildrand des vorhergehenden Bildes liegende Zeilen und in am oberen Bildrand des aktuellen Bildes liegende Zeilen eingefügt werden.

2. Sender zur Erzeugung von Videosignalen, die in einem Verfahren gemäß Anspruch 1 übertragen werden, mit
- einer Videosignalquelle (1), die an ihrem Ausgng ein Videosignal mit herkömmlicher Zeilenzahl und einem im Vergleich zum herkömmlichen Bildbreiten- zu Bildhöhen-Verhältnis vergrößerten Bildbreiten- zu Bildhöhen-Verhältnis zur Verfügung stellt,
- einem Konverter (2), in welchem das Videosignal in eine Vielzahl von ersten Blöcken mit jeweils n Zeilen unterteilt wird und in welchem aus jedem dieser ersten Blöcke ein zeilenzahlreduzierter zweiter Block und ein Zusatzsignal ermittelt wird, welches die durch die Zeilenzahlreduktion abgesonderten Informationen enthält,
- einem Speicher (3) zur Abspeicherung der zeilenzahlreduzierten zweiten Blöcke und der Zusatzsignale, und
- einer Speichersteuerschaltung (4), die den Auslesevorgang aus dem Speicher (3) derart steuert, daß die zeilenzahlreduzierten Blöcke in im mittleren Teil des Bildes liegende Zeilen und ein erster Teil der Zusatzsignale in am oberen Bildrand des Bildes liegende Zeilen des aktuellen Bildes eingefügt wird,
**dadurch gekennzeichnet**, daß
- die Speichersteuerschaltung (4) den Auslesevorgang aus dem Speicher (3) derart steuert, daß ein zweiter Teil der Zusatzsignale in am unteren Bildrand des vorhergehenden Bildes liegende Zeilen eingefügt wird.

3. Sender nach Anspruch 2, **dadurch gekennzeichnet**, daß er eine Klemmschaltung enthält, mittels der der Schwarzpegel des Signals während der Zeilen am oberen und unteren Bildrand, in denen das Zusatzsignal übertragen wird, auf einen ersten Amplitudenwert und während der in der Bildmitte liegenden Zeilen auf einen zweiten Amplitudenwert geklemmt wird, und daß eine Amplitudeneinstellstufe vorgesehen ist, um die Amplitude des übertragenen Zusatzsignals derart einzustellen, daß sie zwischen dem ersten und dem zweiten Amplitudenwert liegt, und um die Amplitude der Bildmitteninformation derart einzustellen, daß sie zwischen dem zweiten Amplitudenwert und dem Weißwert liegt.

4. Empfänger zur Wiedergabe von Videosignalen, die in einem Verfahren gemäß Anspruch 1 übertragen werden, mit
- einer ersten Trennschaltung (7) zur Abtrennung der im mittleren Teil des Bildes übertragenen zeilenzahlreduzierten Blöcke aus dem übertragenen Signal, und
- einem Konverter (10) zur Regenerierung eines Videosignals mit im Vergleich zum herkömmlichen Bildbreiten- zu Bildhöhen-Verhältnis vergrößertem Bildbreiten- zu Bildhöhen-Verhältnis aus den zeilenzahlreduzierten Blöcken und den jeweils zugehörigen Zusatzsignalen,
**gekennzeichnet durch**
- eine zweite Trennschaltung (8) zur Abtrennung der am unteren Bildrand des vorhergehenden Bildes und des am oberen Bildrand des aktuellen Bildes übertragenen Zusatzsignale aus dem übertragenen Signal,
- einen Speicher (9) zur Zwischenspeicherung der abgetrennten Zusatzsignale, und
- eine Speichersteuerschaltung (11), die den Auslesevorgang aus dem Speicher (9) derart steuert, daß die am unteren Bildrand des vorhergehenden Bildes und die am oberen Bildrand des aktuellen Bildes übertragenen Zusatzsignale in zeitlich richtiger Zuordnung zum jeweils zugehörigen zeilenzahlreduzierten Block des aktuellen Bildes aus dem Speicher (9) ausgelesen werden.

5. Empfänger nach Anspruch 4, **dadurch gekennzeichnet**, daß er eine Amplitudeneinstellstufe enthält, mittels der die Amplituden und die Gleichspannungswerte von Zusatzsignal und Bildmitteninformation auf ihre ursprünglichen Werte gebracht werden.

## Claims

1. Method for transmitting broadcast video signals, in which
- at the transmitter end, a video signal having a conventional number of lines and having a picture width to picture height ratio which is enlarged in comparison to the conventional picture width to picture height ratio is produced, this video signal is split into a large number of first blocks each having n lines, a second block, which has a reduced number of lines, and an additional signal being determined from each of these first blocks, which additional signal contains the information separated by the reduction in the number of lines, and the second blocks, which have a reduced number of lines, are inserted into lines located in the central part of the picture and the additional signals are inserted into lines located at the upper and lower edges of the picture, and
- at the receiving end, the additional signals which are transmitted in lines located at the upper and lower edges of the picture being inserted, after reorganisation in time, into the signal which is transmitted in the central part of the picture,
characterized in that, at the transmitter end, the additional signals of the current picture are inserted into lines which are located at the lower picture edge of the preceding picture and into lines which are located at the upper picture edge of the current picture.

2. Transmitter for producing video signals which are transmitted using a method according to Claim 1, having
- a video signal source (1) which makes available at its output a video signal having a conventional number of lines and having a picture width to picture height ratio which is enlarged in comparison to the conventional picture width to picture height ratio,
- a converter (2) in which the video signal is split into a large number of first blocks each having n lines, and in which a second block, which has a reduced number of lines, and an additional signal are determined from each of these first blocks, which additional signal contains the information separated by the reduction in the number of lines,
- a memory (3) for storing the second blocks, which have a reduced number of lines, and the additional signals, and
- a memory control circuit (4) which controls the reading process from the memory (3) in such a manner that the blocks which have a reduced number of lines are inserted into lines which are located in the central part of the picture, and a first portion of the additional signals is inserted into lines of the current image which are located at the upper picture edge of the picture,
characterized in that
- the memory control circuit (4) controls the reading process from the memory (3) in such a manner that a second portion of the additional signals is inserted into lines which are located at the lower picture edge of the preceding picture.

3. Transmitter according to Claim 2, characterized in that said transmitter contains a clamping circuit by means of which the black level of the signal is clamped to a first amplitude value during the lines at the upper and lower edges of the picture, in which lines the additional signal is transmitted, and is clamped to a second amplitude value during the lines which are located in the picture centre, and in that an amplitude setting stage is provided in order to set the amplitude of the transmitted additional signal in such a manner that it lies between the first and second amplitude values, and in order to set the amplitude of the picture centre information in such a manner that it lies between the second amplitude value and the wide level.

4. Receiver for the reproduction of video signals which are transmitted using a method according to Claim 1, having
- a first separation circuit (7) for separating those blocks which have a reduced number of lines and are transmitted in the central part of the picture from the transmitted signal, and
- a converter (10) for regeneration of a video signal having a picture width to picture height ratio which is enlarged in comparison to the conventional picture width to picture height ratio from the blocks having a reduced number of lines and the respectively associated additional signals,
characterized by
- a second separation circuit (8) for separation of those additional signals which are transmitted at the lower picture edge of the preceding picture and the additional signals which are transmitted at the upper picture edge of the current picture from the transmitted signal,
- a memory (9) for buffer storage of the separated additional signals, and
- a memory control circuit (11) which controls the reading process from the memory (9) in such a manner that the additional signals which are transmitted at the lower picture edge of the preceding picture and the additional signals which are transmitted at the upper picture edge of the current picture are read from the memory (9) with the correct time relationship to the respectively associated block, which has a reduced number of lines, of the current picture.

5. Receiver according to Claim 4, characterized in that said receiver contains an amplitude setting stage by means of which the amplitudes and the DC voltage values of the additional signal and picture centre information are changed to their original values.

## Revendications

1. Procédé pour transmettre des signaux vidéo d'images larges, selon lequel
- côté émission, un signal vidéo possédant un nombre usuel de lignes et un rapport de la hauteur à la largeur des lignes qui est accru par rapport au rapport usuel de la largeur à la hauteur des lignes, ce signal vidéo est divisé en une multiplicité de premiers blocs comportant chacun n lignes, et à partir de chacun de ces premiers blocs sont déterminés un second bloc contenant un nombre de lignes réduit et un signal supplémentaire, qui contient les informations écartées sous l'effet de la réduction du nombre de lignes, et les seconds blocs, dont le nombre de lignes est réduit, sont insérés dans des lignes, qui sont situées dans la partie centrale de l'image, et les signaux supplémentaires sont insérés dans des lignes situées au niveau du bord supérieur et du bord inférieur de l'image, et
- côté réception, les signaux supplémentaires, qui sont transmis dans des lignes situées au niveau du bord supérieur et du bord inférieur de l'image, sont insérés, après réarrangement temporel, dans le signal transmis dans la partie centrale de l'image,
caractérisé en ce que, côté émission, les signaux supplémentaires de l'image actuelle sont insérés dans des lignes situées au niveau du bord inférieur de l'image précédente, et dans des lignes situées au niveau du bord supérieur de l'image actuelle.

2. Émetteur pour la production de signaux vidéo, qui sont transmis conformément à un procédé suivant la revendication 1, comportant
- une source de signaux vidéo (1), qui délivre à sa sortie un signal vidéo possédant un rapport de la largeur à la hauteur de l'image qui est accru par rapport au rapport usuel de la largeur à la hauteur de l'image,
- un convertisseur (2), dans lequel le signal vidéo est divisé en une multiplicité de premiers blocs comportant chacun n lignes et dans lequel sont déterminés, à partir de chacun de ces premiers blocs, un second bloc, dont le nombre des lignes est réduit, et un signal supplémentaire, qui contient les informations écartées sous l'effet de la réduction du nombre de lignes,
- une mémoire (3) servant à mémoriser les seconds blocs, dont le nombre de ligne est réduit, et les signaux utiles, et
- un circuit de commande de mémoire (4), qui commande le processus de lecture à partir de la mémoire (3) de telle sorte que les blocs, dont le nombre de lignes est réduit, sont insérés dans des lignes de l'image actuelle, qui sont situées dans la partie centrale de l'image, une première partie des signaux supplémentaires est insérée dans des lignes de l'image actuelle, qui sont situées au niveau du bord supérieur de l'image,
caractérisé par le fait que
- le circuit de commande de mémoire (4) commande le processus de lecture à partir d'une mémoire (3) de telle sorte qu'une seconde partie des signaux supplémentaires est insérée dans des lignes qui sont situées au niveau du bord inférieur de l'image précédente.

3. Émetteur suivant la revendication 2, caractérisé par le fait qu'il contient un circuit de verrouillage, au moyen duquel le niveau de noir du signal est verrouillé sur une première valeur d'amplitude pendant les lignes situées au niveau des bords supérieur et inférieur de l'image et dans lesquelles le signal supplémentaire est transmis, et à une seconde valeur d'amplitude, pendant les lignes situées au centre de l'image, et qu'il est prévu un étage de réglage d'amplitude servant à régler l'amplitude du signal supplémentaire transmis de manière qu'elle se situe entre les première et seconde valeurs d'amplitude, et régler l'amplitude de l'information du centre de l'image de manière qu'elle se situe entre la seconde valeur d'amplitude et la valeur du blanc.

4. Récepteur pour la reproduction de signaux vidéo, qui sont transmis conformément à un procédé selon la revendication 1, comportant
- un premier circuit séparateur (7) pour séparer du signal transmis les blocs, dont le nombre de lignes est réduit et qui sont transmis dans la partie centrale de l'image, et
- un convertisseur (10) pour régénérer un signal vidéo comportant un rapport de la largeur à la hauteur de l'image, qui est accru par rapport au rapport usuel de la largeur à la hauteur de l'image, à partir des blocs, dont le nombre de lignes est réduit et des signaux supplémentaires respectivement associés,
caractérisé par
- un second circuit séparateur (8) pour séparer du signal transmis les signaux supplémentaires transmis au niveau du bord inférieur de l'image précédente et les signaux supplémentaires transmis au niveau du bord supérieur de l'image actuelle,
- une mémoire (9) pour mémoriser temporairement les signaux supplémentaires séparés, et
- un circuit de commande de mémoire (11), qui commande le processus de lecture à partir de la mémoire (9) de telle sorte que les signaux supplémentaires, qui sont transmis au niveau du bord inférieur de l'image précédente, et les signaux supplémentaires, qui sont transmis au niveau du bord supérieur de l'image actuelle, sont lus à partir de la mémoire (9) dans une association temporelle correcte par rapport au bloc respectivement associé, dont le nombre des lignes est réduit, de l'image actuelle.

5. Récepteur selon la revendication 4, caractérisé en ce qu'il contient un étage de réglage d'amplitudes, au moyen duquel les amplitudes et les valeurs de tension continue du signal supplémentaire et de l'information du centre de l'image sont réglées à leurs valeurs initiales.
